# EUROPEAN PATENT APPLICATION

(11) **EP 4 776 381 A1**
(43) Date of publication of application: **15.07.2026**
(21) Application number: 25742808.6
(22) Date of filing: 07.03.2025
(51) Int. Cl.: H01M 10/54, B09B 3/30, G06V 10/82, G06N 3/09, B09B 101/16, G06V 20/64

(54) **APPARATUS AND METHOD FOR MANAGING BATTERY**

(30) Priority: 25.11.2024 KR 20240169656
(71) Applicant: Korea Zinc Co., Ltd., Seoul 03159 (KR)
(72) Inventor: KIM, Seung Hyun, Ulsan 44536 (KR); KIM, Yong Seok, Ulsan 44676 (KR)
(74) Representative: Angerhausen, Christoph
(86) International application number: PCT/KR2025/003016
(87) International publication number: WO 2026/111042

(57) **Abstract**

The present disclosure discloses an apparatus comprising one or more processors, wherein the one or more processors are configured to: receive, from a scanner, first information relating to one or more images generated by scanning a target battery, generate, based on the first information, second information relating to a three-dimensional image of the target battery, generate, based on the first information, third information by identifying one or more characteristics of the target battery, generate, based on the second information and the third information, fourth information in which information relating to the one or more characteristics of the target battery is labeled on the three-dimensional image of the target battery, and transmit the fourth information to an external apparatus configured to perform a disassembly operation for the target battery.

## Description

### TECHNICAL FIELD

The present disclosure relates to a technology for managing a battery.

This study is a result of research conducted by Korea Ministry of Environment(MOE) and Korea Environment Industry & Technology Institute(KEITI) under "Technology development project of improving the circular usability of lithium-ion battery." [Project name: Demonstration of lithium pre-extraction battery recycling technology: dismantling automation and resource recovery, Project number: 00339705]

### BACKGROUND

Batteries recently used in electric vehicles are lithium-ion batteries. Such batteries include four components including a positive electrode material, a negative electrode material, an electrolyte, and a separator. Lithium-ion batteries may be classified into various types depending on the material used as the positive electrode material and may include not only nickel-based ternary system (e.g., nickel-cobalt-manganese (NCM), nickel-cobalt-aluminum (NCA)) batteries, cobalt-based (e.g., lithium cobalt oxide (LCO)) batteries, and manganese-based (e.g., lithium manganese oxide (LMO)) batteries, but also lithium iron phosphate (LFP) batteries, which utilize iron as a substitute for cobalt. In the future, various battery types, including solid-state batteries, are expected to be adopted to reduce the fire risks associated with liquid electrolytes.

Secondary batteries account for 30% of the total life cycle carbon footprint of electric vehicle production, and the carbon footprint of metal raw materials, including nickel, cobalt, and manganese, contributes significantly to this percentage. Greenhouse gases, such as carbon dioxide, are primarily emitted during the mining and refining processes of secondary battery raw materials, and the reuse and recycling of the secondary batteries may significantly contribute to reducing greenhouse gas emissions, playing a crucial role in the transition to a carbon-neutral society by 2050.

In accordance with the growth of the electric vehicle market, the scale of discarded batteries after several years of use is expanding, leading to the activation of the battery recycling industry for the reuse and recycling of these batteries. Battery recycling not only enables the recovery and reuse of valuable metals (nickel, cobalt, manganese, copper, lithium, etc.) essential for battery production, thereby inducing resource recycling opportunities and economic benefits, but also helps reduce environmental pollution associated with the extraction of these metals.

### SUMMARY

At least one embodiment of the present disclosure may provide a technology for effectively disassembling a battery such as a battery pack, a battery module, or a battery cell in order to recycle the battery.

At least one embodiment of the present disclosure may provide a technology for automating a disassembly process for a battery based on a three-dimensional image of the battery.

At least one embodiment of the present disclosure may provide a technology for determining whether a battery is defective, so as not to perform a disassembly operation for the battery.

The technical problems to be solved by the present disclosure are not limited to those mentioned above, and other technical problems not mentioned herein will be clearly understood by those skilled in the art from the description of the specification.

An apparatus according to one embodiment of the present disclosure, comprises: one or more processors; and one or more memories storing instructions executed by the one or more processors, wherein, when the one or more processors execute the instructions, the one or more processors are configured to: receive, from a scanner, first information relating to one or more images generated by scanning a target battery, generate, based on the first information, second information relating to a three-dimensional image of the target battery, generate, based on the first information, third information by identifying one or more characteristics of the target battery, generate, based on the second information and the third information, fourth information in which information relating to the one or more characteristics of the target battery is labeled on the three-dimensional image of the target battery, and transmit the fourth information to an external apparatus configured to perform a disassembly operation for the target battery.

In one embodiment, the one or more processors are configured to, in generating the second information: generate point cloud information, for each of the one or more images, corresponding to a surface of the target battery, and generate, based on the point cloud information, the three-dimensional image of the target battery.

In one embodiment, the one or more processors are configured to, in generating the third information: obtain, by inputting the first information into an artificial neural network which is trained to identify one or more characteristics of a battery from an image of the battery, prediction information on the target battery as an output of the artificial neural network, and generate, based on the prediction information, the third information.

In one embodiment, the one or more processors are configured to: generate, based on the first information, training information by labeling the one or more characteristics of the target battery, and train, based on the training information, the artificial neural network additionally.

In one embodiment, the third information is information indicating one or more characteristics relating to a manufacturer of the target battery.

In one embodiment, the third information is information indicating, as one or more characteristics relating to a field in which the target battery is used, any one of an electric vehicle, a hybrid electric vehicle, a fuel cell electric vehicle, or an energy storage system.

In one embodiment, the third information is information indicating one or more characteristics relating to one or more components constituting the target battery.

In one embodiment, the third information is information indicating, as one or more characteristics relating to a packaging shape of the target battery, any one of a cylindrical shape, a prismatic shape, or a pouch shape.

In one embodiment, the third information is information indicating one or more characteristics relating to a defect of the target battery.

In one embodiment, the one or more processors are configured to associate the second information and the third information with each other and store the second information and the third information in the one or more memories.

In one embodiment, the one or more processors are configured to, in generating the fourth information: determine one or more locations corresponding to the one or more characteristics on the three-dimensional image of the second information, and generate the fourth information by labeling information relating to the one or more characteristics in the one or more locations.

In one embodiment, the external apparatus comprises one or more automated apparatuses, and wherein the one or more processors are configured to, in transmitting the fourth information: determine, based on the third information, a target automated apparatus configured to perform a disassembly operation related to the one or more characteristics from among the one or more automated apparatuses, and transmit the fourth information to the target automated apparatus.

In one embodiment, the third information is information indicating a first type among one or more product types of batteries, and wherein the one or more processors are configured to, in determining the target automated apparatus, determine, from among the one or more automated apparatuses, an automated apparatus configured to perform a disassembly operation for a battery of the first type as the target automated apparatus.

In one embodiment, the third information is information indicating a first component among one or more components constituting a battery, and wherein the one or more processors are configured to, in determining the target automated apparatus, determine an automated apparatus, from among the one or more automated apparatuses, configured to perform a disassembly operation for the first component as the target automated apparatus.

In one embodiment, the third information is information indicating the characteristic relating to a defect state of a battery, and wherein the one or more processors are configured to: determine, based on the third information, whether the defect state of the target battery corresponds to a predetermined first reference state, and generate, in response to the determination that the defect state corresponds to the first reference state, fifth information indicating not to move the target battery to an automated apparatus and transmit the fifth information to the external apparatus.

A method according to one embodiment of the present disclosure, performed by an apparatus comprising one or more processors and one or more memories storing instructions executed by the one or more processors, comprises, by the one or more processors: receiving, from a scanner, first information relating to one or more images generated by scanning a target battery; generating, based on the first information, second information relating to a three-dimensional image of the target battery; generating, based on the first information, third information by identifying one or more characteristics of the target battery; generating, based on the second information and the third information, fourth information in which information relating to the one or more characteristics of the target battery is labeled on the three-dimensional image of the target battery; and transmitting the fourth information to an external apparatus configured to perform a disassembly operation for the target battery.

An embodiment of the present disclosure may provide a technology for effectively disassembling a battery such as a battery pack, a battery module, or a battery cell in order to recycle the battery.

An embodiment of the present disclosure may provide a technology for automating a disassembly process for a battery based on a three-dimensional image of the battery.

An embodiment of the present disclosure may provide a technology for determining whether a battery is defective, so as not to perform a disassembly operation for the battery.

The effects according to the technical idea of the present disclosure are not limited to the effects described above, and other effects not mentioned may be clearly understood by those skilled in the art to which the present disclosure pertains from the description of the specification.

### BRIEF DESCRIPTION OF DRAWINGS

FIG. 1 illustrates an environment to which an apparatus according to an embodiment of the present disclosure is applicable.
FIG. 2 illustrates an example in which an apparatus according to an embodiment of the present disclosure is implemented.
FIG. 3 illustrates a flowchart representing a method according to an embodiment of the present disclosure.
FIG. 4 illustrates an example of an operation environment in which a disassembly operation for a battery is performed, which may be referenced in various embodiments of the present disclosure.
FIG. 5 illustrates another example of an operation environment in which a disassembly operation for a battery is performed, which may be referenced in various embodiments of the present disclosure.
FIG. 6 illustrates a flowchart representing an example of a method for transmitting fourth information from an apparatus to an external apparatus according to various embodiments of the present disclosure.
FIG. 7 illustrates a flowchart representing an example of a method for transmitting fourth information from an apparatus to a first automated apparatus according to various embodiments of the present disclosure.
FIG. 8 illustrates a flowchart representing an example of a method for transmitting fourth information from an apparatus to a second automated apparatus according to various embodiments of the present disclosure.
FIG. 9 illustrates a flowchart representing an example of a method for transmitting fourth information from an apparatus to a third automated apparatus according to various embodiments of the present disclosure.
FIG. 10 illustrates a flowchart representing a method according to an embodiment of the present disclosure.

### DETAILED DESCRIPTION

The various embodiments described in the present disclosure are illustrated for the purpose of clarifying the technical ideas of the disclosure and are not intended to limit the disclosure to any particular embodiment. The technical ideas of the present disclosure include various modifications, equivalents, and alternatives of each embodiment of the present disclosure and include embodiments optionally combined from all or part of each embodiment.Furthermore, the scope of the technical ideas of the present disclosure is not limited to the various embodiments set forth below or to the specific description thereof.

Terms used in the present disclosure, including all technical and scientific terms, are intended to have meanings commonly understood by those of ordinary skill in the art to which the present disclosure belongs, unless otherwise defined.

Expressions such as "comprises", "include", "may include", "provided", "may be provided", "has", "may have", and the like imply the presence of the subject feature (e.g., a function, an operation, or a component) and do not exclude the presence of other additional features. That is, the expressions should be understood as open-ended terms that imply the possibility of including other embodiments.

The singular form used in the present disclosure may include a meaning of a plurality, unless otherwise mentioned, and the same is applied to a singular expression stated in the claims.

Expressions such as "first", "second", and the like used in the present disclosure distinguish one object from another in referring to multiple objects of the same type, unless otherwise indicated in the context, and are not intended to limit the order or importance of objects.

In the present disclosure, expressions such as "A, B, and C", "A, B, or C", "at least one of A, B, and C", or "at least one of A, B, or C" may refer to any of the individually listed items or any possible combination of the listed items. For example, "at least one of A or B" may refer to (1) at least one A, (2) at least one B, or (3) both at least one A and at least one B.

The expression "based on" used in the present disclosure is used to describe one or more factors that influence a determination, an activity of judgment, or an operation described in a phrase or sentence including the relevant expression, and this expression does not exclude an additional factor influencing the determination, the activity of judgment, or the operation.

In the present disclosure, expressions such as a certain component (e.g., a first component) being "connected to" or "coupled with" another component (e.g., a second component) may refer to the certain component being directly connected or coupled to the another component, as well as being connected or coupled through another intervening component (e.g., a third component).

In the present disclosure, the expression "configured to" have meanings such as, depending on the context, "set to", "having an ability to", "changed to", "made to", "to do", and "able to". This expression is not limited to the meaning of "specifically designed in hardware." For example, "a processor configured to perform a specific operation" may refer to a generic purpose processor that may perform the specific operation by executing software, or a special purpose computer that is structured through programming to perform the specific operation.

Hereinafter, embodiments described in the present disclosure will be explained with reference to the accompanying drawings. In the accompanying drawings and descriptions of the drawings, identical or substantially equivalent components may be given the same reference numerals. Furthermore, in the description of various embodiments below, duplicate descriptions of identical or corresponding components may be omitted, but this does not mean that the components are not included in the embodiments.

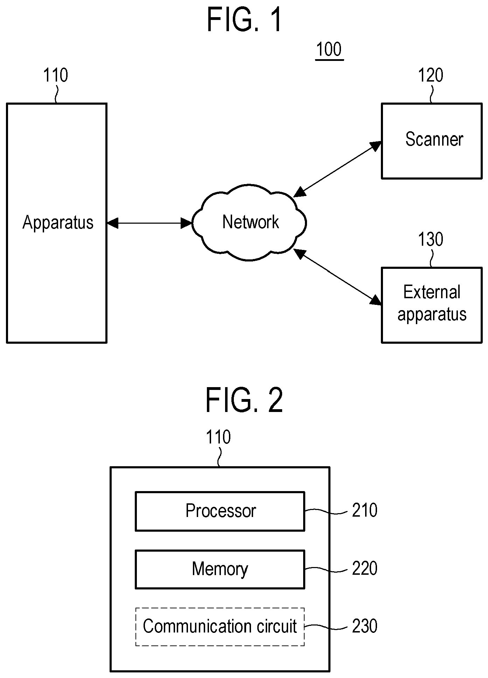

FIG. 1 illustrates an environment 100 to which an apparatus 110 according to an embodiment of the present disclosure is applicable. The environment 100 may include the apparatus 110, a scanner 120 and/or an external apparatus 130. FIG. 1 illustrates only an embodiment for achieving the objectives of the present disclosure, and additional components may be incorporated as needed. For example, the environment 100 may additionally include a user terminal used by a user who is a subject managing the apparatus 110, a transfer apparatus configured to perform a transfer operation with respect to the battery, and an operator terminal used by an operator performing a scanning operation with respect to the battery.

In this specification, the term "battery" may refer to any one of a battery pack, battery module, or battery cell, and may also denote either an assembly of one or more battery cells or an assembly of one or more battery modules interconnected through various components, without limitation, encompassing various forms and units of batteries that would be understood by one skilled in the art. Therefore, the "battery" referred to in this specification may not limited to a specific product, form, or unit and may be interpreted as a concept encompassing batteries of various structures and configurations. For example, the battery may include batteries having various structures and configurations, which are used for various application fields including not only electric vehicles, but also hybrid electric vehicles, fuel cell electric vehicles, and energy storage systems. In addition, the "battery" in this specification may also refer to a waste battery that has been used and is subject to disposal or recycling.

The apparatus 110 may correspond to a server apparatus configured to manage operations of storage of batteries, transportation of batteries, and/or disassembly of batteries. The apparatus 110 may perform the method or the like according to the present disclosure to generate and store various information of the battery, transmit the generated information to the external apparatus 130, and cause the disassembly operation with respect to the battery in the external apparatus 130.

The apparatus 110 may be implemented as one or more computing apparatuses. For example, all functions of the apparatus 110 may be implemented in a single computing apparatus. For another example, a first function of the apparatus 110 may be implemented in a first computing apparatus and a second function thereof may be implemented in a second computing apparatus. Specifically, if the apparatus 110 corresponds to a server apparatus managing a battery, a first function to generate information relating to the battery may be implemented in a first computing apparatus, and a second function distinguished from the first function may be implemented in a second computing apparatus. Although these first computing apparatus and second computing apparatus are physically separate and real, the first computing apparatus and second computing apparatus may be referred to as apparatus 110 as an abstract concept that incorporates the first and second computing apparatus.

The computing apparatus described above may include a desktop computer, a laptop computer, an application server, a proxy server, a cloud server, or the like, but without limitation thereto, may include any kind of apparatus with computing capabilities.

The scanner 120 may obtain first information by scanning the battery. For example, the scanner 120 may include an optical system, a signal processing module, and/or a data output interface which may function together to perform scans of an object to be photographed. The optical system may include a light source configured to emit light to a target object and an optical receiver configured to receive light reflected from the target object. For example, the light source may correspond to a laser or light emitting diode light source, and the optical receiver may correspond to a photo diode or complementary metal oxide semiconductor (CMOS) image sensor. The signal processing module may be configured to convert an analog signal obtained by the optical receiver into a digital signal so as to generate an image for the target object. The output interface may be configured to transmit information having been read by the signal processing module to the external apparatus 130. The transmission may be performed using a universal serial bus (USB), Bluetooth, or a wireless communication protocol. However, it should be understood that the structure of the scanner 120 is not limited thereto, and components may be added, deleted, or modified in order to scan a target object.

The first information may include one or more images for the battery which is a target to be photographed. Each of one or more images may correspond to an image obtained by photographing the target battery from different directions. For example, the scanner 120 may move to scan the target battery in different directions, and the scanner 120 may scan the target battery at regular time intervals so as to generate one or more images. For another example, the target battery may be rotated on the scanning area scanned by the scanner 120, and the scanner 120 may scan the rotating target battery at regular time intervals to generate one or more images.

The apparatus 110 may receive the first information from the scanner 120 through a network. The apparatus 110 may generate, based on the first information, second information which expresses the target battery in a three-dimensional image. In an embodiment, the second information may correspond to reverse engineering information generated by reverse engineering the geometry of the target battery through the one or more images generated by scanning the target battery. For example, the apparatus 110 may generate the second information to express the shape of the target battery in a three-dimensional image relating to a three-dimensional spatial coordinate plane implemented in a computing apparatus by using computer-aided design (CAD) software.

The external apparatus 130 may correspond to an apparatus configured to perform a disassembly operation to disassemble the battery. For example, the external apparatus 130 may include an automated apparatus configured to perform the disassembly operation of the battery. By way of example, the automated apparatus may disassembly the battery by using a robot arm and various tools mounted on the robot arm (e.g., a bolt driver, a laser cutter, tongs, a saw, or the like). A laser cutting tool, a bolting processing tool, a cable cutting tool, a cover handling tool, a scrap handling tool, a cable handling tool, and the like may be located around the automated apparatus, and the automated apparatus may change tools coupled to the robot arm as necessary. The automated apparatus may be configured to transfer components disassembled from the battery pack to another location. The automated apparatus may transfer the components disassembled from the battery pack (e.g., an upper cover, a lower cover, a wire, a connector, a temperature sensor module, a battery management system (BMS) module, a battery module, a battery cells, a bolt, a nut, or the like) to a storage box (e.g., an upper cover storage box, a lower cover storage box, a cell box, a disassembly box, and the like).

In an embodiment, the automated apparatus may obtain information relating to the battery from the apparatus 110 and perform the disassembly operation on the target battery based thereon. For example, the automated apparatus may include a control apparatus configured to analyze the three-dimensional image of the target battery obtained from the apparatus 110 so as to control the automated apparatus. The robot arm of the automated apparatus may be designed to be driven by the control apparatus, which configures a disassembly path of target battery components based on a three-dimensional image of the target battery, and perform the disassembly operation accordingly. For example, the control apparatus may generate a virtual three-dimensional model of the target battery based on the three-dimensional image, identify a location and a connection state of each component configuring the battery relating to the three-dimensional model, and calculate an optimal disassembly path for disassembling connections of each component according to a preconfigured algorithm. While the disassembly operation is performed, an operation state of each stage of the disassembly operation may be transmitted from the automated apparatus to the apparatus 110 via the network, allowing the user of the apparatus 110 to monitor the disassembly operation of the target battery in real-time.

In an embodiment, the external apparatus 130 may include multiple automated apparatuses. Each of the multiple automated apparatuses may perform different operations.

In an embodiment, each of the multiple automated apparatuses may correspond to an apparatus configured to perform a disassembly operation with respect to a battery of specific manufacturer. For example, a battery pack of a first manufacturer may include battery cells arranged in a specific arrangement used by the first manufacturer and a first automated apparatus may include specifically designed automation tools for disassembling the battery cells arranged in this specific arrangement from the battery pack. For example, a battery pack of a second manufacturer may include components, such as specific cover, cases, coolants, seals, cables, connectors, and the like used by the second manufacturer, and a second automated apparatus may include specifically designed automation tools for disassembling the components from the battery pack. By way of example, a battery pack of a third manufacturer may include a specific battery cell arrangement used by the third manufacturer or specific components, and a third automated apparatus may include automation tools designed to be optimized for disassembling the specific battery cell arrangement or the specific components. In various embodiments of the present disclosure, the apparatus 110 may transmit the three-dimensional image generated with respect to the target battery to the automated apparatus, and the automated apparatus may perform the disassembly operation of the target battery by using a battery disassembly algorithm optimized for disassembling of the battery of a specific manufacturer.

In an embodiment, each automated apparatus may correspond to an apparatus configured to perform a disassembly operation with respect to a battery having a specific product name. For example, a battery pack having a first product name may include a first component, and a first automated apparatus may include specifically designed automation tools for disassembling the first component from the battery pack. For example, a battery pack having a second product name may include a second component, and a second automated apparatus may include specifically designed automation tools for disassembling the second component from the battery pack. For example, a battery pack having a third product name may include a third component, and a third automated apparatus may include specifically designed automation tools for disassembling the third component from the battery pack. In various embodiments of the present disclosure, the apparatus 110 may transmit the three-dimensional image generated with respect to the target battery to the automated apparatus, and the automated apparatus may perform the disassembly operation of the target battery by using a battery disassembly algorithm optimized for disassembling of the battery having a specific product name.

In an embodiment, each automated apparatus may correspond to an apparatus configured to perform a disassembly operation with respect to a specific component included in a battery. For example, the first automated apparatus may be designed to be suitable for disassembling the first component included in the battery from the battery, the second automated apparatus may be designed to be suitable for disassembling the second component included in the battery from the battery, and the third automated apparatus may be designed to be suitable for disassembling the third component included in the battery from the battery. In an embodiment, the first automated apparatus may disassemble some components of the battery, and the second or third automated apparatus may further disassemble the partially disassembled battery. In various embodiments of the present disclosure, the apparatus 110 may transmit the three-dimensional image generated with respect to the target battery to the automated apparatus, and the automated apparatus may perform the disassembly operation of the target battery by using a battery disassembly algorithm optimized for disassembling of a specific component of the battery.

Consequentially, in various embodiments of the present disclosure, the apparatus 110 may transmit information relating to the target battery to the automated apparatus, and the automated apparatus may perform the disassembly operation of the target battery by using a battery disassembly algorithm optimized for disassembling of the target battery. Accordingly, automation of disassembly operations for the target battery may improve the speed and safety of battery disassembly operations and increase the productivity of the battery recycling process.

According to various embodiments of the present disclosure, the multiple automated apparatuses may be designed to perform unique functions, respectively. For example, the first automated apparatus may be optimized for cell separation of lithium-ion batteries, and the second automated apparatus may be optimized for the recovery and sorting of electrode materials. In this manner, automated apparatuses with different functions may operate complementarily and contribute to improving the overall productivity and efficiency of the battery disassembly process.

According to various embodiments of the present disclosure, each of the multiple automated apparatuses may independently perform a disassembly operation. Accordingly, disassembly operations for multiple target batteries may be performed concurrently and in parallel on each of multiple automated apparatuses. For example, the first automated apparatus may perform a disassembly operation with respect to a first target battery and the second automated apparatus may concurrently perform a disassembly operation with respect to a second target battery. That is, according to various embodiments of the present disclosure, by performing a disassembly operation on multiple batteries concurrently, the efficiency of the disassembly operation on multiple target batteries may be maximized, and operation time may be shortened, improving the productivity of the battery disassembly operation.

In an embodiment, the external apparatus 130 may further include various sensors for fire detection and a non-combustible firewall for effectively blocking the spread of fire. The sensors may include, for example, a carbon dioxide detection sensor that may quickly detect a fire by monitoring the change in carbon dioxide concentration in real time, which may occur if the battery is disassembled or damaged. For example, the sensors may include an off-gas detection sensor for detecting off-gas which is a flammable gas emitted from lithium-ion batteries. The external apparatus 130 may detect off-gas by using the off-gas detection sensor even before a fire occurs, so that additional operations may be performed to prevent the fire from occurring, such as stopping the disassembling of the battery and activating sprinklers placed around the battery to prevent a fire from occurring. Other sensors may include a smoke detection sensor, a temperature detection sensor, and a flame detection sensor, each of which may provide functions of early recognition of a fire based on a change in the concentration of fine particles, a sudden increase in temperature, and the presence of a flame. Meanwhile, the non-combustible firewall may be composed of aramid fiber, glass fiber, and/or other flame-retardant materials, which may have the effect of preventing the spread of fire to adjacent battery cells or surrounding structures by physically blocking the spread of fire in the event of a fire. The external apparatus 130 may detect whether a fire occurs by using various sensors when the disassembly operation of the battery is performed, and in case that fire occurrence is detected, may prevent the fire from spreading to a peripheral environment or peripheral components by using the non-combustible firewall.

The apparatus 110, the scanner 120, and/or the external apparatus 130 may communicate with each other through a network. The network may be implemented as all kinds of wired or wireless network, for example, a local area network (LAN), a wide area network (WAN), a mobile radio communication network (MRCN), the wireless broadband Internet (WiBro), or the like.

FIG. 2 illustrates an example in which an apparatus 110 according to an embodiment of the present disclosure is implemented. The apparatus 110 may include one or more processors 210 and one or more memories 220. The apparatus 110 may further include a communication circuit 230. In an embodiment, some components may be deleted from the apparatus 110 or other components (e.g., a display, an input apparatus, or the like) may be added to the apparatus 110. Furthermore, additionally or alternatively, some of the components may be integrated and implemented, or implemented as singular or plural entities. In the present disclosure, the one or more processors 210 may be referred to as a processor 210. The term "processor" 210 may refer to a set of one or more processors, unless the context clearly indicates otherwise. In addition, in the present disclosure, the one or more memories 220 may be referred to as a memory 220. The term "memory" 220 may refer to a set of one or more memories 220, unless the context clearly indicates otherwise.

The processor 210 may perform calculation related to control or communication of each component of the apparatus 110 or data processing. Specifically, the processor 210 may drive software (or a computer program) received from another component to control at least one component of the apparatus 110 connected to the processor 210. By way of example, the processor 210 may load a command (e.g., an instruction, code, or code segment) or information on the memory 220, process the command or information stored in the memory 220, and store, on the memory 220, result information according to the processing. In addition, the processor 210 may be operatively connected to components of the apparatus 110 to perform operations, such as various calculations, processing, generation, or manipulation related to the present disclosure.

The memory 220 may store various information. The information stored in the memory 220 may be obtained, processed, or used by at least one component of the apparatus 110 and may include software. The software may include one or more commands, when loaded in the memory 220, causing the processor 210 to perform an operation according to various embodiments of the present disclosure. That is, the processor 210 may execute the one or more commands described above to perform operations according to various embodiments of the present disclosure. The memory 220 may include, for example, transitory memory or non-transitory memory. In an embodiment, the program may correspond to software stored in the memory 220 and may include an operation system for controlling a resource of the apparatus 110, an application, middleware for providing various functions to an application so that the application may use various resources of the apparatus 110, or the like.

The communication circuit 230 may establish a wired or wireless communication channel with another apparatus and transmit or receive various information to or from the another apparatus. In an embodiment, the communication circuit 230 may include at least one port for connection with the another apparatus through a wired cable to communicate with the another apparatus by wire. In this case, the communication circuit 230 may perform communication with the another apparatus connected by wire through the at least one port. In an embodiment, the communication circuit 230 may include a cellular communication module and may be configured to be connected to a cellular network (e.g., 3G, LTE, 5G, WiBro or WiMAX). In an embodiment, the communication circuit 230 may include a near field communication module to transmit or receive information to or from another apparatus using near field communication (e.g., Wi-Fi, Bluetooth, Bluetooth Low Energy (BLE), and UWB). In an embodiment, the communication circuit 230 may include a non-contact communication module for non-contact communication. The non-contact communication may include, for example, at least one non-contact-type proximity communication technology, such as near field communication (NFC) communication, radio frequency identification (RFID) communication, or magnetic secure transmission (MST) communication. In addition to the various examples described above, the apparatus 110 may be implemented in a variety of other ways known in the art for communicating with another apparatus, and the scope of the present disclosure is not limited by the aforementioned examples.

The processor 210, the memory 220, and the communication circuit 230 may be connected to each other through a bus, a general-purpose input/output (GPIO), a serial peripheral interface (SPI), or a mobile industry processor interface (MIPI), and transmit and receive data or a signal.

In an embodiment, the apparatus 110 may further include a display. The display may display various screens based on control of the processor 210. In order to display, on the display, a screen to which various interfaces are applied, a web browser or dedicated application may be installed in the apparatus 110. The display may correspond to a configuration capable of interacting with the user and receive an input from the user. The display may be implemented in the form of a touch sensor panel (TSP) capable of recognizing contact or proximity of various external objects (e.g., a finger or stylus).

In an embodiment, the apparatus 110 may further include an input apparatus (e.g., a mouse or keyboard). The input apparatus may receive information to be used in components of the apparatus 110 from the outside of the apparatus 110.

Hereinafter, the method according to various embodiments of the present disclosure will be described in detail. Although operations are shown in a specific order in the drawings below, it should be noted that the operations do not necessarily have to be executed in the specific order or sequential order shown, or that all of the illustrated operations must be executed to obtain the desired results.

Furthermore, the operations of the method to be described with reference to the drawings below may be performed by a computing apparatus. That is, the operations of the method may be implemented as one or more instructions to be executed by a processor 210 of the computing apparatus. All operations included in the method may be executed by a single physical computing apparatus, or a first operation of the method may be performed by a first computing apparatus and a second operation of the method may be performed by a second computing apparatus.

Hereinafter, the description will be continued assuming that the operation of the above-described method is performed by the apparatus 110. Furthermore, for the sake of convenience in explanation, the subject performing the operations included in the method may be omitted. However, unless the context clearly indicates otherwise, it should be interpreted that the operations are performed by the apparatus 110.

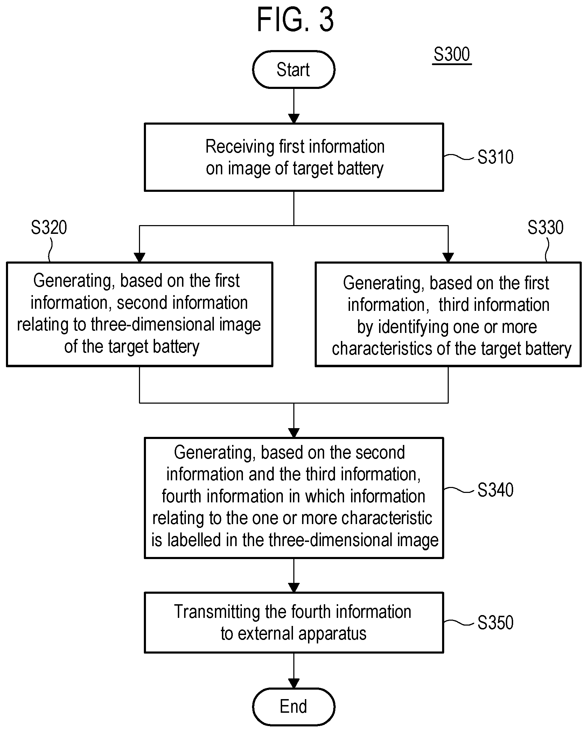

FIG. 3 illustrates a flowchart representing a method according to an embodiment of the present disclosure. The method may include a series of operations performed by the apparatus 110 in conjunction with the scanner 120 and/or the external apparatus 130.

In operation S310, the processor 210 may receive, from the scanner 120, first information relating to one or more images generated by scanning the target battery. The scanner 120 may scan the target battery to generate an image regarding the target battery, and the processor 210 may receive an image from the scanner 120 through a network.

In an embodiment, the scanner 120 may scan the target battery at regular time intervals to generate one or more images. Each of one or more images may correspond to an image obtained by photographing the target battery from different directions. For example, in a state where the target battery is fixed, the scanner 120 may move around the target battery and scan the target battery at regular time intervals so as to generate one or more images. For another example, in a state where the scanner 120 is fixed, the scanner 120 may scan the target battery on a scanning area at regular time intervals and the battery is rotated on the scanning area so as to generate one or more images.

In an embodiment, the regular time interval may be a predetermined interval. For example, the scanner 120 may be pre-configured to scan the target battery at 0.01-second intervals. For example, when the scanner 120 scans the target battery for 1 second, the scanning may be performed at 0.01-second intervals to generate 100 images for 1 second.

In an embodiment, the scanner 120 may be controlled to configure the regular time interval to be smaller than a predetermined interval. For example, the processor 210 may control the scanner 120 to configure the regular time interval to a predetermined interval of 0.005 second, which is less than a predetermined interval of 0.01 seconds. In this case, more images may be obtained during the same time period, and accordingly, in generating a three-dimensional image for the target battery, which will be described below, the shape of the battery relating to a three-dimensional image may become more similar to the shape of the actual target battery.

In an embodiment, the scanner 120 may be controlled to configure the regular time interval to be smaller than a predetermined interval. For example, the processor 210 may control the scanner 120 to configure the regular time interval to a predetermined interval of 0.02 second, which is greater than a predetermined interval of 0.01 seconds. In this case, fewer images may be obtained during the same time period, and accordingly, in generating a three-dimensional image for the target battery, which will be described below, the number of images processed by the processor 210 is reduced, thereby reducing the time required to generate a three-dimensional image.

In an embodiment, the user may input a user input to the apparatus 110 through the input apparatus of the apparatus 110, and the processor 210 may adjust the regular time interval based on the user input.

In operation S320, the processor 210 may generate, based on the first information, second information relating to the three-dimensional image of the target battery. For example, the second information may include coordinate information for one or more points corresponding to a surface of the target battery relating to a three-dimensional spatial coordinate plane. For example, the second information may correspond to information in which the surface of the target battery is expressed in a mesh data form relating to a three-dimensional spatial coordinate plane.

In an embodiment, the processor 210 may generate point cloud information corresponding to the surface of the target battery by using each of one or more images. The processor 210 may generate a three-dimensional image regarding the target battery based on the point cloud information. The processor 210 may generate a shape of the target battery relating to a three-dimensional spatial coordinate plane by connecting points corresponding to the same locations on the surface of the target battery across each image, based on the point cloud information corresponding to each of the one or more images. For example, the processor 210 may further process information to express the shape of the target battery in a mesh data form on a spatial coordinate plane. The mesh data may be configured by polygonal faces and may generally be configured by triangular elements. When the shape of the battery is expressed in the mesh data form, the processor 210 may reproduce the shape and contour of the surface of the target battery. However, without limitation thereto, the second information may correspond to information in various structures, which represents the target battery as a three-dimensional image.

In operation S330, the processor 210 may generate, based on the first information, third information by identifying one or more characteristics of the target battery. In an embodiment, the processor 210 may input the first information into an artificial neural network trained to identify one or more characteristics of a battery from an image of the battery and obtain prediction information about the target battery as an output of the artificial neural network. The processor 210 may generate third information based on the prediction information.

For example, the artificial neural network may include a supervised learning-based classification model. The artificial neural network may be generated by learning images of one or more batteries, and may be generated to identify one or more characteristics of the battery from the images of the batteries.

In the training of an artificial neural network, a label indicating a class and an input image may be used as training data as a pair. In addition, evaluation data for evaluation according to the training of the artificial neural network may be provided separately from the training data.

In an embodiment, the artificial neural network may be generated to identify a manufacturer of a battery by learning a label indicating the manufacturer and an image of the battery. For example, "image A" of a battery manufactured by manufacturer A paired with a label "manufacturer A" may be used as a pair of first training data, "image B" of a battery manufactured by manufacturer B paired with a label "manufacturer B" may be used as a pair of second training data, and "image C" of a battery manufactured by manufacturer C paired with a label "manufacturer C" may be used as a pair of third training data. Accordingly, as the image of the target battery is input, the artificial neural network may output information indicating the manufacturer of the target battery as prediction information. The third information may include information relating to the manufacturer of the battery indicated by the prediction information.

In an embodiment, the artificial neural network may be generated to identify a product name of a battery by learning a label indicating the product name and an image of the battery. For example, "image A" of a battery having product name A paired with a label "product name A" may be used as a pair of first training data, "image B" of a battery having product name B paired with a label "product name B" may be used as a pair of second training data, and "image C" of a battery having product name C paired with a label "product name C" may be used as a pair of third training data. Accordingly, as the image of the target battery is input, the artificial neural network may output information indicating the product name of the target battery as prediction information. The third information may include information relating to the product name of the battery indicated by the prediction information.

In an embodiment, the artificial neural network may be generated to identify a field where a battery is used by learning a label indicating the field where the battery is used and an image of the battery. For example, "image A" of a battery used in the "electric vehicle" field paired with a label "electric vehicle" may be used as a pair of first training data, "image B" of a battery used in the "hybrid electric vehicle" field paired with a label "hybrid" may be used as a pair of second training data, "image C" of a battery used in a "fuel cell electric vehicle" field paired with a label "fuel cell electric vehicle" may be used as a pair of third training data, and "image D" of a battery used in the "energy storage system" field paired with a label "energy storage system" may be used as a pair of fourth training data. Accordingly, as the image of the target battery is input, the artificial neural network may output information indicating the field where the battery is used as prediction information. The third information may include information relating to the field where the battery is used indicated by the prediction information.

In an embodiment, the artificial neural network may be generated to identify a component included in a battery by learning a label indicating the component and an image of the battery. For example, the component included in the battery may include at least one of an upper cover, a lower cover, a wire, a connector, a temperature sensor module, a battery management system (BMS) module, a battery module, a battery cell, a bolt, a nut, or the like. For example, "image A" of a battery where the component is a wire paired with a label "wire" may be used as a pair of first training data, "image B" of a battery where the component is a battery module paired with a label "battery module" may be used as a pair of second training data, and "image C" of a battery where the component is a BMS module paired with a label "BMS module" may be used as a pair of third training data. Accordingly, as the image of the target battery is input, the artificial neural network may output information indicating the component of the target battery as prediction information. In an embodiment, the prediction information may further include information indicating a location of a component identified by the artificial neural network. The third information may include information relating to the component of the battery and/or the location of the component of the battery indicated by the prediction information.

In an embodiment, the artificial neural network may be generated to identify a packaging form of a battery by learning a label indicating the packaging form and an image of the battery. For example, the packaging shape may include any one of a cylindrical shape, a prismatic shape, or a pouch shape. For example, "image A" of a battery having a cylindrical packaging shape paired with a label "cylindrical" may be used as a pair of first training data, "image B" of a battery having an angled packaging shape paired with a label "angled" may be used as a pair of second training data, and "image C" of a battery having a pouched packaging shape paired with a label "pouched" may be used as a pair of third training data. Accordingly, as the image of the target battery is input, the artificial neural network may output information indicating the packaging shape of the target battery as prediction information. The third information may include information relating to the packaging shape of the battery indicated by the prediction information.

In an embodiment, the artificial neural network may be generated to identify defeat-related information of a battery by learning a label indicating the defeat-related information and an image of the battery. For example, the defect-related information may refer to defect types such as a defect caused by impact, a defect due to poor component connections, a defect caused by fire, or a defect resulting from missing components. For example, "image A" of a battery having defect A paired with a label "defect A" may be used as a pair of first training data, "image B" of a battery having defect B paired with a label "defect B" may be used as a pair of second training data, and "image C" of a battery having defect C paired with a label "defect C" may be used as a pair of third training data. Accordingly, as the image of the target battery is input, the artificial neural network may output information indicating the defect of the target battery as prediction information. The third information may include information relating to the defect of the battery indicated by the prediction information.

In an embodiment, the artificial neural network may be generated to identify whether a defect of a battery exists by learning a label indicating presence or absence of a defect and an image of the battery. For example, "image A" of a battery having a defect paired with a label "defective" may be used as a pair of first training data and "image B" of a battery having no defect paired with a label "not defective" may be used as a pair of second training data. Accordingly, as the image of the target battery is input, the artificial neural network may output information indicating whether a defect of the target battery exists as prediction information. The third information may include information relating to presence or absence of a defect of the battery indicated by the prediction information.

During the training process, the artificial neural network may derive patterns from multiple pieces of training data and may, when a new image is input, classify the corresponding image using a corresponding label. To implement such an artificial neural network, various known technologies may be referred to in the present disclosure.

In an embodiment, the artificial neural network, after completing the training, may be stored in the memory 220, which may be implemented using various types of storage means, including a semiconductor memory apparatus, flash memory, or magnetic storage apparatus. In an embodiment, the artificial neural network may be implemented through a calculation apparatus like a neuromorphic processor. The neuromorphic processor is a specialized processor designed to accelerate neural network computations at the hardware level and may be engineered to mimic the functions of neurons and synapses in the human brain so as to efficiently perform parallel calculation. In an embodiment, the artificial neural network may be implemented in an optimized form through hardware accelerators such as a field-programmable gate array (FPGA) or an application-specific integrated circuit (ASIC) and these hardware accelerators may significantly enhance the training and inference speed of the neural network. According to various embodiments of the present disclosure, the artificial neural network may be stored and implemented through various types of storage media and computing apparatuses, thereby improving the performance and efficiency of the neural network.

In an embodiment, training information may be generated by labeling a characteristic of the target battery to the first information. The processor 210 may additionally train the artificial neural network based on the prediction information.

In various embodiments of the present disclosure, operations S320 and S330 may be performed in parallel by one or more processors 210 and according to another embodiment, the operations may be performed sequentially. The order in which each operation is performed may not be limited to a specific order. That is, operations S320 and S330 may be performed in parallel or performed independently in consideration of the performance or capacity of the processor 210.

In operation S340, the processor 210 may generate fourth information in which information relating to the one or more characteristics of the target battery is labeled on the three-dimensional image regarding the target battery, based on the second information and the third information. Here, the labeling specific information relating to the three-dimensional image may indicate matching specific information to a specific area or location on the three-dimensional image. For example, the processor 210 may also tag some areas or specific locations of the three-dimensional image with specific information, mark specific information with annotations, or generate arbitrary metadata that matches specific information to specific locations.

In an embodiment, in case that the third information indicates a characteristic regarding the manufacturer of the battery, the processor 210 may generate the fourth information by labeling the three-dimensional image with manufacturer information of the battery. In an embodiment, in case that the third information indicates a characteristic regarding the product name of the battery, the processor 210 may generate the fourth information by labeling the three-dimensional image with product name information of the battery.

In an embodiment, in case that the third information indicates a characteristic regarding the component of the battery, the processor 210 may generate the fourth information by labeling the three-dimensional image with component information of the battery. For example, the processor 210 may determine the location of the component of the battery on the three-dimensional image and label the determined location with corresponding component information. Accordingly, the fourth information may include information indicating the component of the battery and information indicating the location of the component of the battery.

In an embodiment, in case that the third information indicates a characteristic regarding the defect of the battery, the processor 210 may generate the fourth information by labeling the three-dimensional image with defect information of the battery. For example, the processor 210 may determine the type and location of the defect of the battery on the three-dimensional image and label the determined location with corresponding information indicating the type of the defect. Accordingly, the fourth information may include information indicating the defect type (or defect form) of the battery and information indicating the location of the defect of the battery.

In operation S350, the processor 210 may transmit the fourth information to the external apparatus 130 which is performing the disassembly operation with respect to the target battery. In an embodiment, the external apparatus 130 may include one or more automated apparatuses. The processor 210 may transmit the fourth information to one of the one or more automated apparatuses.

In an embodiment, the processor 210 may associate the second information and third information with each other and store same in one or more memories 220. In case that the second information and third information are generated with respect to one or more target batteries, the processor 210 may associate the second information and third information with each other for each of the one or more target batteries. For example, the second information and third information for a first target battery may be associated with each other, and the second information and third information for a second target battery may be associated with each other. As the second information and the third information are associated with each other and stored in the memory 220 for each of the one or more target batteries, various battery characteristics may be established in a database, enabling systematic storage and management of various information related to various batteries so as to facilitate easy reference to the necessary information during battery disassembly or recycling.

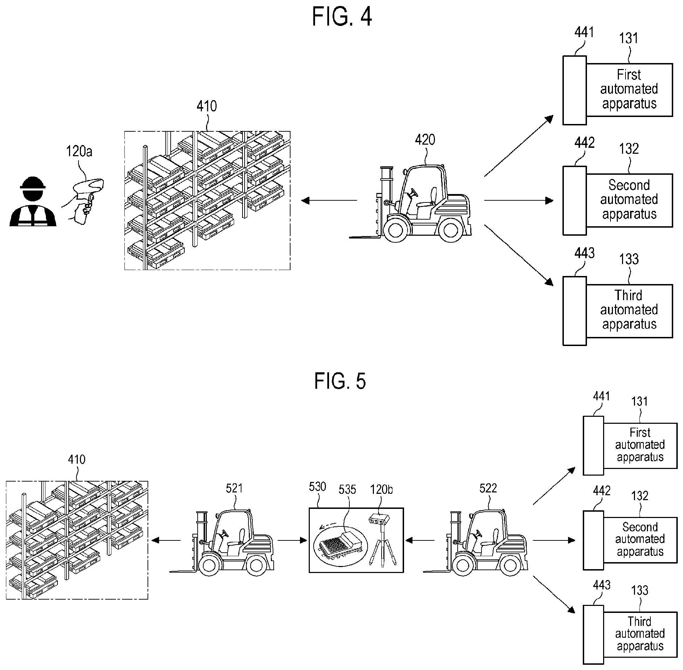

FIG. 4 illustrates an example of an operation environment in which a disassembly operation for a battery is performed, which may be referenced in various embodiments of the present disclosure. The operation environment of FIG. 4 may include a scanner 120a, a storage apparatus 410, a transfer apparatus 420, first to third worktables 441, 442, and 443, and first to third automated apparatuses 131, 132, and 133.

A storage apparatus 410 may include a storage rack configured to store one or more batteries. For example, the storage rack includes one or more shelves, and each shelf is structured so that the battery may be stably disposed. Each shelf may be designed to be adjustable according to the size and shape of the battery, and may further include a support or a clip configured to fix the battery. One or more batteries may be arranged on each shelf. A distance between the storage rack and the shelf may be adjustable and thus receive batteries of various sizes. In addition, to enhance user convenience, the storage rack may be designed to have a movable wheel or a foldable structure and, if necessary, equipped with a cover or a door to protect the batteries from environmental factors.

The transfer apparatus 420 may correspond to an apparatus configured to move a battery stored in the storage apparatus 410 to a worktable. In various embodiments of the present disclosure, the transfer apparatus 420 configured to transfer a battery may be implemented in various forms. For example, the transfer apparatus 420 may include a forklift, an automated guided vehicle (AGV), and the like. For example, the forklift may be equipped with specially designed forks or carriers for loading batteries and configured to safely and efficiently transport batteries of various sizes and weights. For example, automated guided vehicles may automatically transport loaded batteries along a pre-programmed path and may include a function to detect and avoid obstacles through sensors.

In an embodiment, an automated guided vehicle may deliver a battery from a departure point to a destination according to control of the apparatus 110. For example, the apparatus 110 may transmit, to the automated guided vehicle, information indicating a location of the storage rack as the departure point and information indicating a location of a target automated apparatus among one or more automated apparatuses as the destination, and accordingly, the automated guided vehicle may deliver the battery from the storage rack to the automated apparatus.

In an embodiment, an automated guided vehicle may deliver batteries from a departure point to a destination according to control of an external server. For example, the apparatus 110 may transmit location information of the departure point and the destination to the external server, and the external server may control the automated guided vehicle to move from the departure point to the destination according to reception of the location information.

Each of one or more automated apparatuses may perform a disassembly operation with respect to a battery on a different worktable. In an embodiment, a first automated apparatus 131 may perform a disassembly operation with respect to a battery manufactured by a specific manufacturer on a first worktable 441. In an embodiment, a second automated apparatus 132 may perform a disassembly operation with respect to a battery having a specific product name on a second worktable 442. In an embodiment, a third automated apparatus 133 may perform a disassembly operation for separating a component included in a battery from the battery on a third worktable 443.

The transfer apparatus 420 may deliver a battery to one of the first worktable 441 to the third worktable 443. In an embodiment, the apparatus 110 may generate the fourth information for the target battery and determine a target automated apparatus suitable for the disassembly operation of the target battery from among the first automated apparatus 131 to the third automated apparatus 133 to transmit the fourth information to the target automated apparatus. In an embodiment, the apparatus 110 may be further configured to control the transfer apparatus 420. The apparatus 110 may control the transfer apparatus 420 to deliver the battery to the worktable corresponding to the target automated apparatus to which the fourth information is transmitted.

In an embodiment, the scanner 120a may be provided in a portable form. For example, the scanner 120a may include a handle designed to be easily carried by the operator. The operator may scan the battery at various angles by moving the scanner 120a. Specifically, the operator may continuously scan multiple batteries stored in the rack while holding the scanner 120a and moving along the storage rack, and the apparatus 110 may receive information about an image of each of the multiple batteries scanned by the scanner 120a. The scanning operation may be particularly useful in warehouses or distribution centers that manage large quantities of batteries. In an embodiment, the scanner 120a may transmit scanned data to the apparatus 110 through a network in real time, and accordingly, the apparatus 110 may monitor and manage the inventory and state of scanned batteries in real time.

In an embodiment, the scanner 120a may be installed in the transfer apparatus. For example, the scanner 120a may be designed to be disposed at various locations of the automated guided vehicle to perform an automated scanning operation. For example, the scanner may be installed on an upper portion of the forks of the automated guided vehicle to scan a battery during a process in which the battery is stored in or removed from the storage rack. in addition, the scanner may include a structure which is attached to a lateral surface or a lower portion of the carrier of the automated guided vehicle to scan the battery loaded on the carrier. Additionally, the scanner may be located at an uppermost portion of the automated guided vehicle to allow simultaneous scanning of multiple batteries loaded on the automated guided vehicle while the automated guided vehicle is traveling, providing the ability to quickly scan multiple batteries during the battery delivery process. Furthermore, the scanner may transmit information generated from a scan result to the apparatus 110 through the network. In various embodiments of the present disclosure, the arrangement and structure of the scanner 120a may allow scanning operations to be automated, thereby not only reducing the workload of operators performing scanning operations, but also improving operation efficiency.

FIG. 5 illustrates another example of an operation environment in which a disassembly operation for a battery is performed, which may be referenced in various embodiments of the present disclosure. Hereinafter, the description of elements that are substantially identical to those described with reference to FIG. 4 will be omitted and the differences will be focused on. The operation environment of FIG. 5 may include a scanner 120b, a storage apparatus 410, a first transfer apparatus 521, a scan worktable 530, a second transfer apparatus 522, first to third worktables 441, 442, and 443, and first to third automated apparatuses 131, 132, and 133. The first transfer apparatus 521 may deliver one or more batteries stored in the storage apparatus 410 to the scan worktable 530. In an embodiment, the second transfer apparatus 522 may deliver a battery 535 having scanned on the scan worktable 530 to one of the first to third worktables 441, 442, and 443.

In an embodiment, the scanner 120b may be provided in a fixable form. A rotatable turntable may be mounted on the scan worktable 530 on which the scanner 120b is disposed. A specific target object, for example, a battery, is loaded on an upper turntable, and as the turntable rotates, the object moves in the circumferential direction within a field of view of the scanner 120b. The scanner 120b may capture the entire outline of the target object from various angles using this mechanical rotation movement, and thus may precisely scan the three-dimensional shape information of the object. The rotation speed and direction of the turntable may be adjusted by the control apparatus, enabling efficient and flexible scanning operations to suit various scanning requirements. In various embodiments of the present disclosure, the structural characteristics of the scanner 120b being fixed to the scan worktable 530 may minimize the effects of vibrations that occur during the scanning operation, thereby increasing the precision of the image obtained by the scanner 120b.

However, the structure and/or arrangement state of the scanner 120b is not limited thereto, and the scanner 120b may be rotated or moved while the scan worktable 530 is stationary to scan the battery on the scan worktable 530. For example, the scanner 120b may be designed to rotate 360 degrees around the battery, or to move in a hemispherical shape around an upper portion of the battery to scan a front surface of the battery. In various embodiments of the present disclosure, due to the structural characteristics of the scanner 120b moving on the scanning worktable 530, the battery may be precisely scanned from various angles. As such, the rotation and movement method of the scanner may be appropriately adjusted based on the shape and size of the battery located on the scan worktable, and the optimal scanning path may be provided based on the structural characteristics of the target battery.

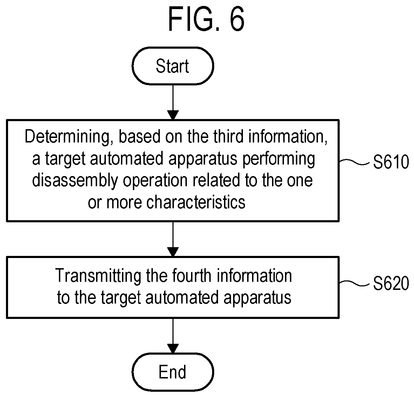

FIG. 6 illustrates a flowchart representing a method for transmitting fourth information from an apparatus 110 to an external apparatus 130 according to various embodiments of the present disclosure. The external apparatus 130 may include one or more automated apparatuses. The flowchart of FIG. 6 may be an example of a method for handling the third information and/or the fourth information generated by performing the method 300 of FIG. 3 for the target battery in various embodiments of the present disclosure.

In operation S610, the processor 210 may determine a target automated apparatus configured to perform a disassembly operation related to the one or more characteristics of the target battery among one or more automated apparatuses, based on the third information. In operation S620, the processor 210 may transmit the fourth information to the target automated apparatus.

In an embodiment, the memory 220 may store information corresponding to various automated apparatuses for performing the disassembly operation of the battery. The information may include information about the type of automated apparatus corresponding to each automated apparatus, the type of the battery suitable for disassembly by the automated apparatus, and the type of a component suitable for disassembly by the automated apparatus. The processor 210 may determine a target automated apparatus from among one or more automated apparatuses, based on the third information and information stored in the memory 220.

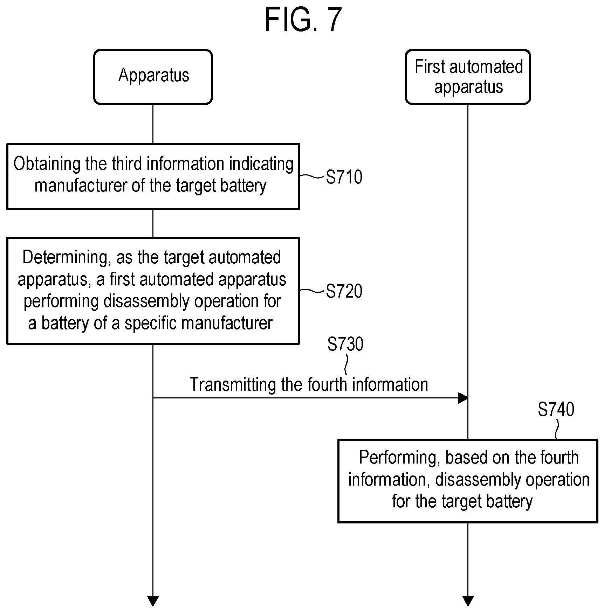

FIG. 7 illustrates a flowchart representing a method for transmitting fourth information from an apparatus 110 to a first automated apparatus according to various embodiments of the present disclosure. In operation S710, the processor 210 of the apparatus 110 may obtain third information indicating a manufacturer of a target battery. In an embodiment, the third information may correspond to information indicating a first manufacturer of the battery.

In operation S720, the processor 210 of the apparatus 110 may determine, as a target automated apparatus, an automated apparatus optimized for disassembly of the battery manufactured by the first manufacturer among the one or more automated apparatuses. For example, the memory 220 of the apparatus 110 may store information indicating a first automated apparatus as the automated apparatus suitable for the disassembly operation of the battery of the first manufacturer, and the processor 210 may use this information to determine the first automated apparatus as the target automated apparatus.

In operation S730, as the first automated apparatus is determined as the target automated apparatus, the apparatus 110 may transmit the fourth information to the first automated apparatus. In an embodiment, as the fourth information is transmitted to the first automated apparatus, the apparatus 110 may control an automated guided vehicle to cause the automated guided vehicle to move the target battery to a first worktable in which the first automated apparatus performs a disassembly operation for the target battery.

In operation S740, the first automated apparatus may perform the disassembly operation with respect to the target battery, based on the fourth information. The fourth information may include a three-dimensional image with respect to the target battery. The first automated apparatus may perform the disassembly operation with respect to the target battery by using the three-dimensional image with respect to the target battery.

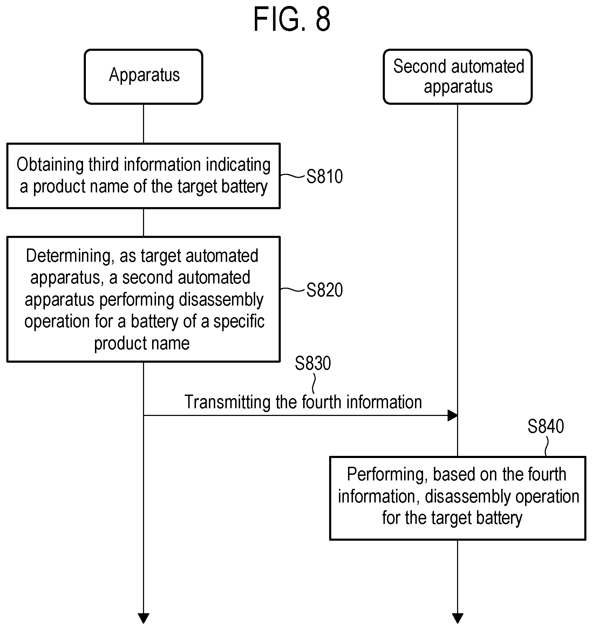

FIG. 8 illustrates a flowchart representing a method for transmitting fourth information from an apparatus 110 to a second automated apparatus according to various embodiments of the present disclosure. In operation S810, the apparatus 110 may obtain third information indicating a product name of the target battery. In an embodiment, the third information may correspond to information indicating a specific product name of the battery.

In operation S820, the processor 210 of the apparatus 110 may determine, as a target automated apparatus, an automated apparatus optimized for disassembly of the battery having a specific product name among the one or more automated apparatuses. For example, the memory 220 of the apparatus 110 may store information indicating a second automated apparatus as the automated apparatus suitable for the disassembly operation of the battery having a specific product name, and the processor 210 may use this information to determine the second automated apparatus as the target automated apparatus.

In operation S830, as the second automated apparatus is determined as the target automated apparatus, the apparatus 110 may transmit the fourth information to the second automated apparatus. In an embodiment, as the fourth information is transmitted to the second automated apparatus, the apparatus 110 may control an automated guided vehicle to cause the automated guided vehicle to move the target battery to a second worktable in which the second automated apparatus performs a disassembly operation for the target battery.

In operation S840, the second automated apparatus may perform the disassembly operation with respect to the target battery, based on the fourth information. The fourth information may include a three-dimensional image with respect to the target battery. The second automated apparatus may perform the disassembly operation with respect to the target battery by using the three-dimensional image with respect to the target battery.

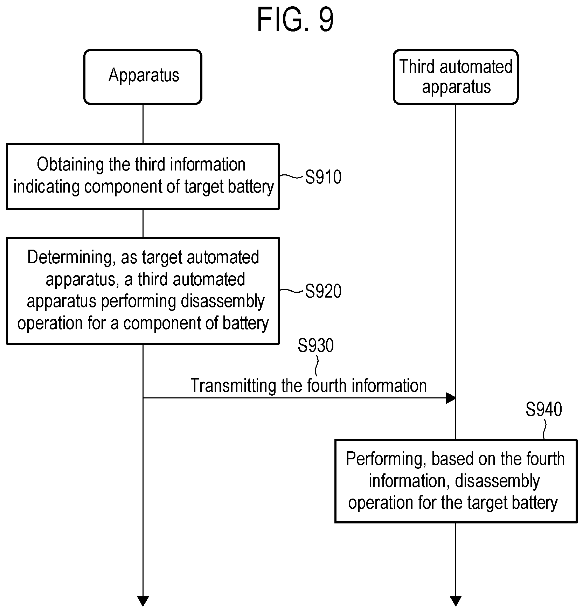

FIG. 9 illustrates a flowchart representing a method for transmitting fourth information from an apparatus 110 to a third automated apparatus according to various embodiments of the present disclosure. In operation S910, the apparatus 110 may obtain third information indicating one or more components of the target battery. For example, the third information may correspond to third information indicating a first component.

In operation S920, the processor 210 of the apparatus 110 may determine, as a target automated apparatus, an automated apparatus optimized for disassembly of the first component of the battery among the one or more automated apparatuses. For example, the memory 220 of the apparatus 110 may store information indicating a third automated apparatus as the automated apparatus suitable for the disassembly operation of the first component, and the processor 210 may use this information to determine the third automated apparatus as the target automated apparatus.

In operation S930, as the third automated apparatus is determined as the target automated apparatus, the apparatus 110 may transmit the fourth information to the third automated apparatus. In an embodiment, as the fourth information is transmitted to the third automated apparatus, the apparatus 110 may control an automated guided vehicle to cause the automated guided vehicle to move the target battery to a third worktable in which the third automated apparatus performs a disassembly operation for the target battery.

In operation S940, the third automated apparatus may perform the disassembly operation with respect to the target battery, based on the fourth information. The fourth information may include a three-dimensional image with respect to the target battery. In an embodiment, the fourth information may correspond to information in which information indicating the first component is tagged at the location corresponding to the first component on the three-dimensional image. The third automated apparatus may perform the disassembly operation with respect to the target battery by using the three-dimensional image with respect to the target battery and the information indicating the location of the first component.

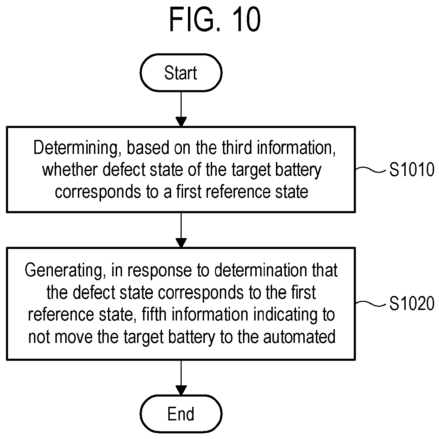

FIG. 10 illustrates a flowchart representing a method according to an embodiment of the present disclosure. The method according to FIG. 10 may correspond to a method for determining whether to perform the disassembly operation with respect to the target battery according to a defect state of the target battery identified by the third information.

In operation S1010, the processor 210 may determine whether the defect state of the target battery corresponds to a predetermined first reference state, based on the third information.

In an embodiment, the predetermined first reference state may correspond to a state in which a battery has a defect. For example, as the third information indicating that the target battery has a defect is obtained, the processor 210 may determine the defect state of the target battery corresponds to the first reference state.

In an embodiment, the predetermined first reference state may correspond to a state in which a battery has a defect of a first type. For example, as the third information indicating that the target battery has a defect of the first type is obtained, the processor 210 may determine the defect state of the target battery corresponds to the first reference state. For another example, as the third information indicating that the target battery has a defect of a type other than the first type (e.g., a second type) is obtained, the processor 210 may determine that the defect state of the target battery does not correspond to the first reference state. For example, the defect of the first type may indicate that the battery has been discolored by fire, while the defect of the second type may indicate that the battery has been distorted in appearance by impact. As such, in various embodiments of the present disclosure, the processor 210 may determine that the defect state of the target battery corresponds to the first reference state, based on types of defects indicated by the third information.

In operation S1020, in response to the determination that the defect state corresponds to the first reference state, the processor 210 may generate fifth information indicating that the target battery does not move to an automated apparatus and transmit the fifth information to the external apparatus 130. The external apparatus 130 may include a transfer apparatus. In an embodiment, as the fifth information is received, the external apparatus 130 may not perform the disassembly operation with respect to the target battery. For example, the external apparatus 130 may control the transfer apparatus and deliver the target battery to an area configured to store discarded batteries.

In various embodiments of the present disclosure, by preventing batteries that are defective or at risk of fire from entering an automated disassembly apparatus, the fire hazards that may occur during the disassembly process may be preemptively blocked. Accordingly, damage to the automated apparatus may be prevented during the process of performing the disassembly operation with respect to the battery.

In the flowchart of the present disclosure, each operation of the method or the algorithm is described in a sequential order, but each operation may be performed in an order that may be arbitrarily combined by the present disclosure, in addition to being performed sequentially. The description regarding the flowchart of the present disclosure does not exclude changes or modifications to the method or the algorithm, and does not imply that any operation is necessary or desirable. In an embodiment, at least some of the operations may be performed in parallel, iteratively, or heuristically. In another embodiment, at least some of the operations may be omitted or other operations may be added.

Various embodiments according to the present disclosure may be implemented as software on a machine-readable storage medium (MRSM) that may be read by a computing apparatus. The software may correspond to software for implementing various embodiments described in the present disclosure. The software may be inferred from the various embodiments described in the present disclosure by programmers in the technical field to which the present disclosure pertains. For example, software may be a computer program that includes instructions that may be read by a computing apparatus. The computing apparatus is an apparatus capable of operating according to an instruction retrieved from a storage medium and may, for example, be interchangeably referred to as an electronic apparatus. In an embodiment, the processor 210 of the computing apparatus may execute the retrieved instruction, causing components of the computing apparatus to perform a function corresponding to the instruction. The storage medium may refer to any type of recording medium on which information is stored and which may be read by an apparatus. The storage medium may include a ROM, a RAM, a CD-ROM, a magnetic tape, a floppy disk, optical information storage apparatus, or the like. In an embodiment, the storage medium may be implemented in a distributed form, such as in a computer system connected to a network. In this case, the software may be distributed and stored on a computer system or the like and executed. In another embodiment, the storage medium may correspond to a non-transitory storage medium. The non-transitory medium refers to a tangible medium that exists regardless of whether information is stored semi-permanently or temporarily, and does not include a signal that is temporarily transmitted.

Although the technical concept according to the present disclosure has been described through various embodiments, the technical ideas of the present disclosure include various substitutions, modifications and changes that may be made within the scope understandable by those skilled in the art to which the present disclosure pertains. Further, those substitutions, modifications, and changes should be considered as being included in the claims.

## Claims

1. An apparatus comprising:
one or more processors; and
one or more memories storing instructions executed by the one or more processors,
wherein, when the one or more processors execute the instructions, the one or more processors are configured to:
receive, from a scanner, first information relating to one or more images generated by scanning a target battery,
generate, based on the first information, second information relating to a three-dimensional image of the target battery,
generate, based on the first information, third information by identifying one or more characteristics of the target battery,
generate, based on the second information and the third information, fourth information in which information relating to the one or more characteristics of the target battery is labeled on the three-dimensional image of the target battery, and
transmit the fourth information to an external apparatus configured to perform a disassembly operation for the target battery.

2. The apparatus of claim 1, wherein the one or more processors are configured to, in generating the second information:
generate point cloud information, for each of the one or more images, corresponding to a surface of the target battery, and
generate, based on the point cloud information, the three-dimensional image of the target battery.

3. The apparatus of claim 1, wherein the one or more processors are configured to, in generating the third information:
obtain, by inputting the first information into an artificial neural network which is trained to identify one or more characteristics of a battery from an image of the battery, prediction information on the target battery as an output of the artificial neural network, and
generate, based on the prediction information, the third information.

4. The apparatus of claim 3, wherein the one or more processors are configured to:
generate, based on the first information, training information by labeling the one or more characteristics of the target battery, and
train, based on the training information, the artificial neural network additionally.

5. The apparatus of claim 3, wherein the third information is information indicating one or more characteristics relating to a manufacturer of the target battery.

6. The apparatus of claim 3, wherein the third information is information indicating, as one or more characteristics relating to a field in which the target battery is used, any one of an electric vehicle, a hybrid electric vehicle, a fuel cell electric vehicle, or an energy storage system.

7. The apparatus of claim 3, wherein the third information is information indicating one or more characteristics relating to one or more components constituting the target battery.

8. The apparatus of claim 3, wherein the third information is information indicating, as one or more characteristics relating to a packaging shape of the target battery, any one of a cylindrical shape, a prismatic shape, or a pouch shape.

9. The apparatus of claim 3, wherein the third information is information indicating one or more characteristics relating to a defect of the target battery.

10. The apparatus of claim 1, wherein the one or more processors are configured to associate the second information and the third information with each other and store the second information and the third information in the one or more memories.

11. The apparatus of claim 1, wherein the one or more processors are configured to, in generating the fourth information:
determine one or more locations corresponding to the one or more characteristics on the three-dimensional image of the second information, and
generate the fourth information by labeling information relating to the one or more characteristics in the one or more locations.

12. The apparatus of claim 1, wherein the external apparatus comprises one or more automated apparatuses, and
wherein the one or more processors are configured to, in transmitting the fourth information:
determine, based on the third information, a target automated apparatus configured to perform a disassembly operation related to the one or more characteristics from among the one or more automated apparatuses, and
transmit the fourth information to the target automated apparatus.

13. The apparatus of claim 12, wherein the third information is information indicating a first type among one or more product types of batteries, and
wherein the one or more processors are configured to, in determining the target automated apparatus, determine, from among the one or more automated apparatuses, an automated apparatus configured to perform a disassembly operation for a battery of the first type as the target automated apparatus.

14. The apparatus of claim 12, wherein the third information is information indicating a first component among one or more components constituting a battery, and
wherein the one or more processors are configured to, in determining the target automated apparatus, determine an automated apparatus, from among the one or more automated apparatuses, configured to perform a disassembly operation for the first component as the target automated apparatus.

15. The apparatus of claim 1, wherein the third information is information indicating the characteristic relating to a defect state of a battery, and
wherein the one or more processors are configured to:
determine, based on the third information, whether the defect state of the target battery corresponds to a predetermined first reference state, and
generate, in response to the determination that the defect state corresponds to the first reference state, fifth information indicating not to move the target battery to an automated apparatus and transmit the fifth information to the external apparatus.

16. A method performed by an apparatus comprising one or more processors and one or more memories storing instructions executed by the one or more processors, the method comprising, by the one or more processors:
receiving, from a scanner, first information relating to one or more images generated by scanning a target battery;
generating, based on the first information, second information relating to a three-dimensional image of the target battery;
generating, based on the first information, third information by identifying one or more characteristics of the target battery;
generating, based on the second information and the third information, fourth information in which information relating to the one or more characteristics of the target battery is labeled on the three-dimensional image of the target battery; and
transmitting the fourth information to an external apparatus configured to perform a disassembly operation for the target battery.

17. The method of claim 16, wherein the generating of the second information comprises, by the one or more processors:
generating point cloud information, for each of the one or more images, corresponding to a surface of the target battery, and
generating, based on the point cloud information, the three-dimensional image of the target battery.

18. The method of claim 16, wherein the generating of the third information comprises, by the one or more processors:
obtaining, by inputting the first information into an artificial neural network which is trained to identify one or more characteristics of a battery from an image of the battery, prediction information on the target battery as an output of the artificial neural network, and
generating, based on the prediction information, the third information.

19. The method of claim 18, wherein the third information is information indicating one or more characteristics relating to a manufacturer of the target battery.

20. The method of claim 18, wherein the third information is information indicating one or more characteristics relating to one or more components constituting the target battery.
